# EUROPÄISCHE PATENTSCHRIFT

(11) **EP 1 407 654 B1**
(45) Veröffentlichungstag und Bekanntmachung des Hinweises auf die Patenterteilung: **18.07.2012**
(21) Anmeldenummer: 03029331.0
(22) Anmeldetag: 01.03.2000
(51) Int. Cl.: A01D 41/127, G01N 21/35

(54) **Erntemaschine mit einer Messeinrichtung zur Messung von Inhaltsstoffen in Erntegut**
Harvester with a measuring device for measuring components in crop
Machine de récolte avec un dispositif de mesure des substances contenues dans des récoltes

(30) Priorität: 19.05.1999 DE 19922867
(43) Veröffentlichungstag der Anmeldung: 14.04.2004
(62) Teilanmeldung aus: 00104194.6
(73) Patentinhaber: DEERE & COMPANY, Moline, Illinois 61265-8098 (US)
(72) Erfinder: Ohlemeyer, Heinrich, 67071 Ludwigshafen (DE); Kormann, Georg Dr., 66424 Homburg (DE)
(74) Vertreter: Holst, Sönke

(56) Entgegenhaltungen:
- EP-A- 0 511 184
- EP-A- 0 723 740
- WO-A-98/21930
- DE-A- 3 211 731
- US-A- 5 751 421

## Beschreibung

Die Erfindung betrifft eine Erntemaschine mit einer Messeinrichtung nach dem Oberbegriff des Anspruchs 1.

Im Stand der Technik (DE 196 48 126 A) sind Erntemaschinen bekannt, die mit Einrichtungen zum Messen des Gutdurchsatzes, der Feuchtigkeit und der Masse bzw. Dichte ausgestattet sind. Die Oberflächenfeuchtigkeit des Erntegutes wird mittels eines Infrarotsensors gemessen, während die Schichtdicke und Dichte sowie die Feuchtigkeit des Erntegutes mittels Mikrowellen mit Wellenlängen von 1 m bis herunter zu ca. 0,5 mm gemessen werden soll.

Die DE 32 32 746 C beschreibt eine Erntemaschine, insbesondere eine Ballenpresse, einen Ladewagen oder einen Mähdrescher mit einem Feuchtigkeitsensor, der am Weg des Ernteguts durch die Maschine vorgesehen ist.

Durch diese Messeinrichtungen sind aber nicht alle für die weitere Nutzung der Erntegüter benötigten Parameter bekannt. Interessant für die Weiterverarbeitung wären beispielsweise Proteingehalt, Fettgehalt, Verdaulichkeit, Brennwert, Faserlänge und -gehalt usw.

In der US 5 327 708 A wird ein System zur Untersuchung von Erntegut vorgeschlagen. Bei einem Mähdrescher wird in regelmäßigen Zeitabständen eine Probe aus dem in den Korntank gelangenden Gutstrom entnommen und durch eine geeignete Einrichtung auf Masse, Feuchtigkeitsgehalt und Dichte untersucht. Auch andere Parameter des Guts, wie Proteingehalt, Zuckergehalt, Ölgehalt und Farbe können gemessen werden. Hier werden systembedingt nur an diskreten Stellen Messwerte aufgenommen, so dass nur eine lückenhafte Ertragskarte hergestellt werden kann.

Ähnliche Systeme sind in der US 5 092 819 A, US 5 751 421 A, WO 98/21930 A, EP 843 959 A und den nach dem Prioritätstag der vorliegenden Anmeldung veröffentlichten WO 99/40419 A, WO 99/58959 A, EP 0 960 557 A und EP 0 960 558 A offenbart.

Das der Erfindung zugrunde liegende Problem wird darin gesehen, dass eine teilflächenspezifische Kartierung der Parameter mit dem Messsystem der US 5 327 708 A lückenhaft ist. Bei einer Laboranalyse ist die Kartierung aufgrund der hohen Anzahl zu nehmender und zu analysierender Proben sehr aufwendig.

Die EP 0 723 740 A beschreibt eine Erntemaschine mit einem Sensor zur Erfassung der Farbe, Verunreinigung, des Stickstoffgehalts, Dichte oder Partikelgröße des Ernteguts. Die erfasste Größe wird zur Auswahl eines von mehreren Behältern verwendet, in die das Erntegut abgelegt wird. Außerdem kann die erfasste Größe georeferenziert in einer Ertragskarte abgespeichert werden. Einzelheiten zur Anbringung des Sensors werden in diesem Dokument nicht offenbart.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise werden Inhaltsstoffgehalte des Erntegutes und/oder weitere Parameter bereits während der Ernte ermittelt. Da ein Ortungssystem vorhanden ist, werden die Daten auch georeferenziert aufgenommen. Nach Abschluss der Ernte können die gemessenen Parameter und/oder Inhaltsstoffgehalte des erzielten Ertrags sofort ausgegeben werden, was unter anderem als Grundlage für betriebswirtschaftliche Überlegungen dienen kann. Außerdem ergibt sich die Möglichkeit, dass die Daten zu entsprechenden Wertkarten (Ertragskarten) weiterverarbeitet werden. Diese Daten bilden die Grundlage für eine teilflächenspezifische Bewirtschaftung.

Die Messeinrichtung dient zur Untersuchung von Erntegut, das in einer landwirtschaftlichen Maschine zur Aufnahme und/oder Behandlung von Erntegut entlang eines Weges gefördert wird. Das Messergebnis kann zur Steuerung von Prozessparametem verwendet werden. Es findet in der Messeinrichtung ein optisches Spektrometer Verwendung, das die Intensität vom Erntegut reflektierten Lichts wellenlängenaufgelöst erfasst. Dabei wird das Erntegut mit breitbandigem (sog. weissem) Licht beaufschlagt. Die einzelnen, lichtangeregtert Schwingungsmoden der nachzuweisenden Inhaltsstoffe des Erntegutes (die sich durch Absorption, Streuung bzw. Extinktion auswirken), bzw. zur Messung der Parameter des Erntegutes selbst, können so erfasst und die gemessenen Daten einer geeigneten Auswertungseinrichtung zugeführt werden, die den jeweiligen Gehalt an den interessierenden Inhaltsstoffen bzw. die Parameter in an sich bekannter Weise errechnet (siehe z.B. US 5,258,825 und EP 511 184 A und darin genannte Referenzen). Das Spektrometer weist in an sich bekannter Weise vorzugsweise wenigstens ein Gitter und/oder Prisma auf. Als Detektoren können Halbleiterdetektoren, insbesondere CCDs, oder Photodioden aus Silizium bzw. Indium-Gallium-Arsenid, dienen.

Die Messeinrichtung ist an einer Erntemaschine in Form eines Feldhäckslers mit einer Erntegutaufnahmeeinrichtung, einer Häckseltrommel und einer Austrageinrichtung angebracht. Die Messeinrichtung wirkt mit Erntegut zusammen, das die Austrageinrichtung durchströmt. Bei einem Feldhäcksler kann das Messergebnis zur Steuerung der Zugabe von Silierstoffen verwendet werden.

Als Inhaltsstoffe des Erntegutes, deren Anteile im Erntegut von der Messeinrichtung erfasst werden, kommen insbesondere organische Inhaltsstoffe in Betracht, wie Stärke, enzymlösliche organische Substanzen (ElosT), Öl, und Rohprotein. Außerdem kann auch der Gehalt an nichtorganischen Inhaltsstoffen, wie Mineralstoffen (Asche), z.B. Natrium und Magnesium, oder Wasser gemessen werden.

Sich von Volumen, Dichte und Masse unterscheidende Parameter des Erntegutes, die zusätzlich oder alternativ zu den Inhaltsstoffen erfasst und gespeichert werden können, sind insbesondere der Gehalt an Trockensubstanz, die Faserlänge, die Verdaulichkeit, der Energiegehalt und der Rohfasergehalt des Erntegutes. Der Rohfasergehalt und die Faserlänge kann insbesondere durch eine Weiterverarbeitung von Ausgangssignalen eines Sensors mittels eines Rechners ermittelt werden. Auch die Farbe des Erntegutes kann als Basis für die Qualitätsbestimmung bei vielen nachwachsenden Rohstoffen dienen.

Außerdem kann die Feuchtigkeit des Ernteguts mittels geeigneter Sensoren erfasst und gemeinsam mit den sich auf die Inhaltsstoffe bzw. die anderen Parameter beziehenden Messwerten abgespeichert werden.

Als Messverfahren der Messeinrichtung bietet sich insbesondere die optische Spektroskopie im sichtbaren Wellenlängenbereich und/oder im nahen Infrarotbereich an. Die verwendeten Wellenlängen liegen zwischen 100 nm und 1 mm, vorzugsweise zwischen 400 nm und 1,7 µm. In diesen Wellenlängenbereichen lassen sich die insbesondere organischen Inhaltsstoffe durch die optische Spektroskopie besonders gut nachweisen. Dabei wird in der Regel eine Kalibrierung der optisch arbeitenden Messeinrichtung zweckmäßig sein.

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung,
- Fig. 2: ein Schaltdiagramm des Bordcomputers und der Sensoren,
- Fig. 3: eine Einrichtung zur Inhaltsstoffmessung, und
- Fig. 4: den Sensor der Einrichtung zur Inhaltsstoffmessung der Figur 3.

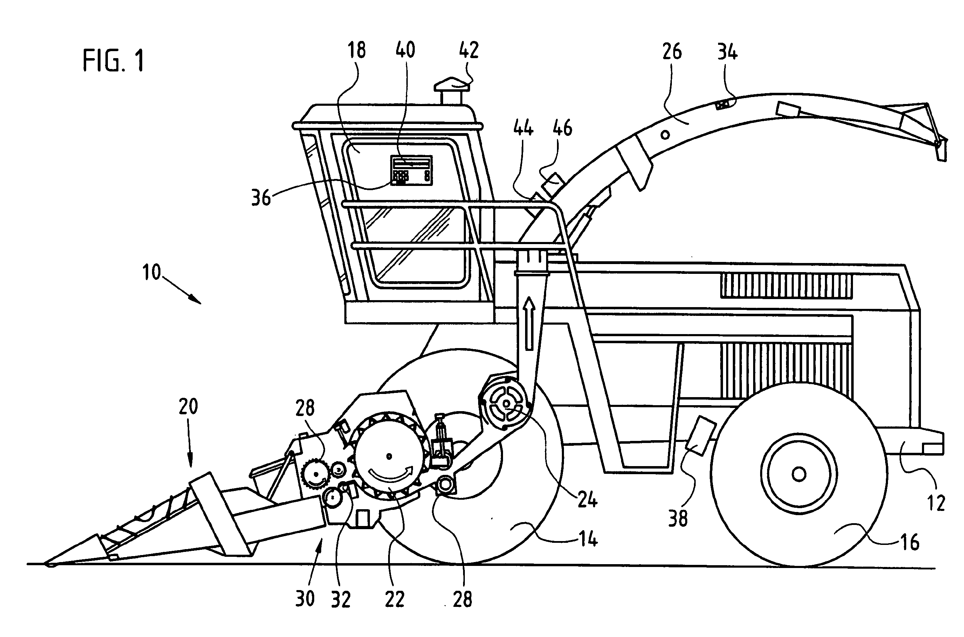

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20, die in der dargestellten Ausführungsform ein reihenunabhängiges Maisgebiss ist, vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenherfahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Weitere Einzelheiten der Erntemaschine 10 bedürfen keiner Beschreibung, weil diese an sich bekannt ist.

An der in Figur 1 dargestellten Erntemaschine 10 sind einige Sensoren zur Messung des Flusses des die Erntemaschine 10 pro Zeiteinheit durchströmenden Erntegutes, des sog. Durchsatzes, vorgesehen. Ein erster Durchsatzsensor 28 misst den Abstand zwischen zwei Vorpresswalzen 30, die zwischen der Erntegutaufnahmevorrichtung 20 und der Häckseltrommel 22 angeordnet sind, und zwischen denen das Erntegut hindurchgefördert wird, mittels eines von der federnd aufgehängten Vorpresswalze 30 betätigten Schiebe- oder Drehwiderstandes (Potentiometer). Weiterhin wird die Drehzahl einer der Vorpresswalzen mittels eines zweiten Sensors 32 gemessen. Außerdem können Sensoren das Antriebsdrehmoment der Fördervorrichtung 24 sowie der Nachzerkleinerungseinrichtung 28 messen.

Ein mit einer Anzeige 36 verbundener Bordcomputer 40 dient zur Aufzeichnung und Auswertung der gemessenen Daten.

Eine Lichtschranke 34 ist im Austragschacht 26 angeordnet, die feststellt, ob überhaupt Erntegut durch die Erntemaschine 10 gefördert wird. Eine Erfassung von Messwerten findet nur dann statt, wenn die Lichtschranke 34 eine Förderung von Erntegut detektiert. Über den Abstand der Vorpresswalzen 30 und ihre Drehzahl bzw. Drehgeschwindigkeit lässt sich der Fluss (also die Rate) des Volumens errechnen, das die Erntemaschine 10 pro Zeiteinheit durchströmt. Aufgrund der Vorpressung durch die Vorpresswalzen 30 wird eine annähernd konstante Dichte des Erntegutes erreicht. Unter dieser Voraussetzung ist der Volumenfluss direkt proportional zum Massenfluss. Die Lichtschranke 34 gibt eine Information darüber ab, ob Erntegut im Austragschacht 26 vorhanden ist. Mit dieser Information können alle Messsignale getriggert werden. Eine Messung somit erfolgt nur dann, wenn die Lichtschranke 34 Material erfasst. Weiterhin ermöglicht die Lichtschranke eine Korrekturfunktion, da es bei sehr geringem Erntegutfluss möglich ist, dass die Vorpresswalze 30 nicht ausgelenkt wird, aber dennoch Erntegut vorhanden ist. Anhand des Signals der Lichtschranke wird dieser Sachverhalt erkannt, und der Erntegutfluss kann beispielsweise über einen konstanten Korrekturfaktor oder -summanden berichtigt werden.

Um einen Ertrag zu errechnen, werden außerdem Informationen über die aktuelle Fahrgeschwindigkeit und Arbeitsbreite benötigt. Die Fahrgeschwindigkeit kann aus den Daten der Vortriebseinrichtungen der Erntemaschine 10 entnommen oder über einen Radarsensor 38 erfasst werden. Mittels eines GPS- (Global Positioning System) Sensors 42 kann der Ertrag mittels des Bordcomputers 40 teilflächenspezifisch kartiert werden.

Weiterhin ist die Erntemaschine 10 mit einer Feuchtigkeitsmesseinrichtung 44 zur Messung der Feuchte des Erntegutes ausgestattet. Sie kann in an sich bekannter Weise erfolgen, beispielsweise konduktiv (Leitwertmessung), dielektrisch oder kapazitiv, mit Mikrowellen oder optisch im nahen Infrarotbereich. Diese Messverfahren sind an sich bekannt und bedürfen daher keiner näheren Erläuterung.

Erfindungsgemäß ist eine Messeinrichtung 46 zur Messung bestimmter Inhaltsstoffe des Erntegutes vorgesehen. Sie bestimmt den prozentualen Anteil dieser Inhaltsstoffe im Erntegut und arbeitet ebenfalls optisch im Transmissionsund/oder Reflexionsbetrieb im sichtbaren Bereich und/oder nahen Infrarotbereich. Für die Triggerung (Aktivierung) dieser Einrichtung 46 wird das Signal der Lichtschranke 34 verwendet. Am Bordcomputer 40 können damit Wasser-, Rohprotein-, Fettgehalt etc. des Erntegutes angezeigt und georeferenziert abgespeichert werden. Die Messeinrichtung 46 ist außerdem eingerichtet, weitere Parameter des Erntegutes zu erfassen, nämlich die Faserlänge, den Fasergehalt und den Gehalt an Trockensubstanz.

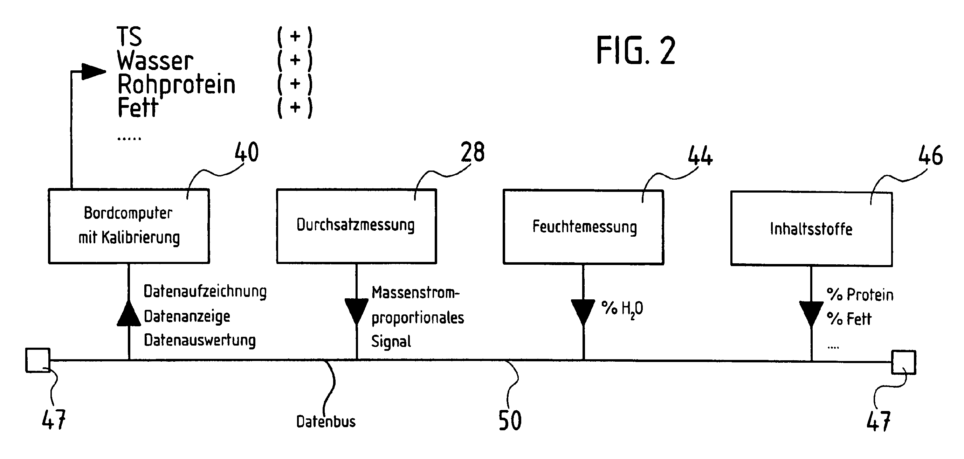

In Figur 2 ist ein schematisches Schaltdiagramm wiedergegeben, das die Verbindung zwischen Bordcomputer 40 und dem Durchsatzsensor 28, der Feuchtigkeitsmesseinrichtung 44 zur Messung der Feuchte des Erntegutes, sowie der Einrichtung zur Messung der Inhaltsstoffe 46 über einen Datenbus 50 darstellt. Der Datenbus 50 erspart das Verlegen separater Kabel, und kann auch mit weiteren Einrichtungen der Erntemaschine 10, wie dem Motor und Bedienungseinrichtungen in Verbindung stehen, was durch die kleinen Rechtecke 47 an beiden Enden des Busses 50 angedeutet wird. Wird der Datenbus 50 nur für die Messeinrichtung verwendet, ist er an beiden Enden mit Abschlusswiderständen abzuschließen. Die Zeichnung verdeutlicht schematisch, dass dem Bordcomputer 40 vom Durchsatzsensor ein massenstromproportionales Signal, von der Feuchtigkeitsmesseinrichtung 44 ein Signal, das eine Information über den Wassergehalt des Erntegutes, sowie von der Messeinrichtung 46 ein Signal, das den Gehalt des Erntegutes an bestimmten Inhaltsstoffen, wie Protein oder Fett, zugeführt wird. Diese Informationen werden kontinuierlich angezeigt und abgespeichert.

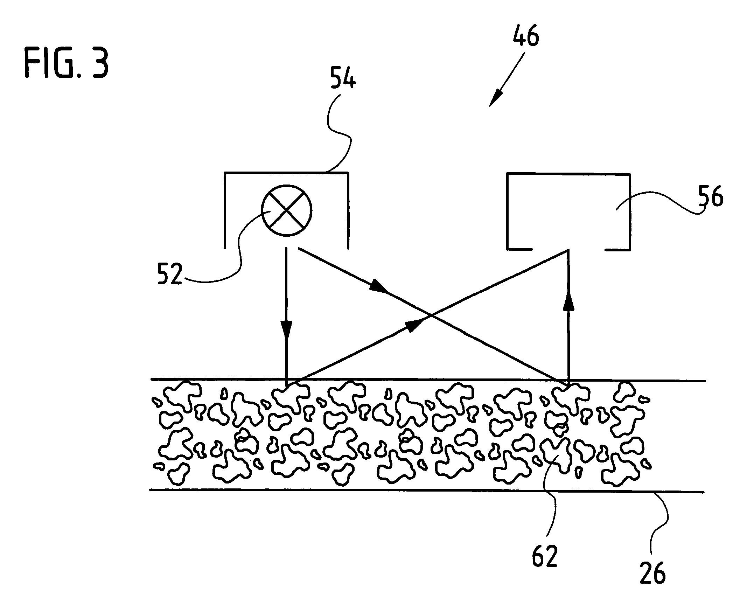

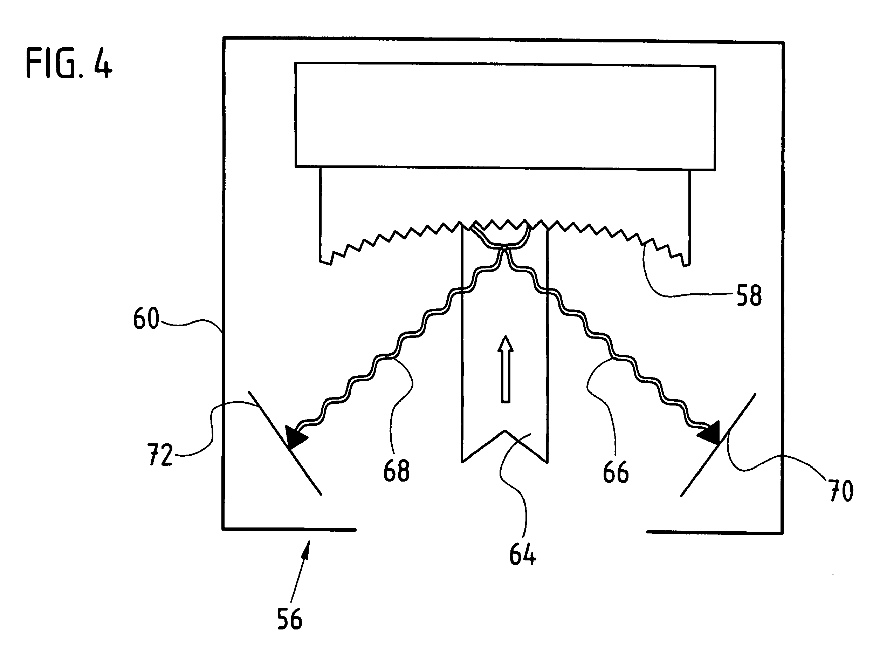

In Figur 3 ist eine Messeinrichtung 46 dargestellt. Sie umfasst eine innerhalb eines Lampengehäuses 54 angeordnete Lampe 52, deren breitbandiges (weisses) Licht den vom Erntegut 62 durchströmten Innenraum der Austragseinrichtung 26 erreicht. Vom Erntegut 62, das die Austragseinrichtung 26 durchströmt, reflektiertes Licht erreicht einen Sensor 56, dessen detaillierter Aufbau aus Figur 4 hervorgeht.

Der Sensor 56 weist ein Gehäuse 60 auf, in dessen Innenraum ein parabelförmiger Spiegel 58 angeordnet ist, der eine Oberfläche mit Erhebungen mit dreieckförmigem Querschnitt aufweist. Die Erhebungen erstrecken sich senkrecht zur Zeichenebene. Der Spiegel 58 streut das vom Erntegut reflektierte, breitbandige Licht 64 in wellenlängenabhängige Richtungen durch konstruktive bzw. destruktive Interferenz, da die Erhebungen relativ klein dimensioniert und in der Zeichnung überdimensional dargestellt sind. Es entstehen zwei vom Spiegel 58 reflektierte Lichtstrahlen 66, 68, die in Figur 4 nach links und rechts abgelenkt werden und jeweils einen unterschiedlichen Wellenlängenbereich umfassen. Die Lichtstrahlen 66, 68 erreichen jeweils einen Detektor 70, 72. Die Detektoren 70, 72 umfassen mehrere nebeneinander angeordnete lichtempfindliche Elemente, z. B. (Si- oder InGaAS-) Dioden oder CCDs. Das Ausgangssignal jedes Elements der Detektoren 70, 72 entspricht somit der empfangenen Intensität in einem bestimmten Lichtwellenlängenbereich, der durch die Position des Elements des Detektors 70, 72 und die Beugungsrichtung des Spiegels 58 definiert ist. Anhand der Ausgangssignale der Elemente Detektoren 70, 72 kann mit einem Computer, der der Messeinrichtung 46 zugeordnet ist, oder mit dem Bordcomputer 40 eine Auswertung der gemessenen Spektren erfolgen, anhand derer die Bestimmung des Anteils bestimmter Inhaltsstoffe möglich ist. Als Wellenlängenbereich kommt das nahe Infrarot und das sichtbare Licht infrage, z. B. der Bereich von 400 bis 1700 nm.

Es wäre denkbar, anstelle des mit einem Gitter ausgestatteten Spiegels 58 zur wellenlängenabhängigen Streuung des Lichtes wenigstens ein Prisma zu verwenden, das das Licht durch seine Dispersion spektral zerlegt.

Anzumerken ist, dass beliebige Messeinrichtungen 46, die im sichtbaren Wellenlängenbereich und/oder nahen Infrarotbereich arbeiten, verwendbar sind.

## Patentansprüche

1. Erntemaschine (10), mit einer Messeinrichtung (46), die eingerichtet ist, den Gehalt von Erntegut (62), das entlang eines Weges gefördert wird, an Inhaltsstoffen zu erfassen, und mit einer Einrichtung, insbesondere einem Computer (40), die mit der Messeinrichtung (46) verbunden ist und kontinuierlich die Messwerte der Messeinrichtung (46) zusammen mit der Durchsatzmenge des Erntegutes (62) georeferenziert aufzeichnet, **dadurch gekennzeichnet, dass** die Erntemaschine (10) ein Feldhäcksler mit einer Erntegutaufnahmeeinrichtung (20), einer Häckseltrommel (22) und einer Austrageinrichtung (26) ist, und dass die Messeinrichtung (46) ein Spektrometer umfasst, das die Intensität von breitbandigem Licht wellenlängenaufgelöst erfasst, welches durch Erntegut (62) reflektiert wird, das die Austrageinrichtung (26) durchströmt.

2. Erntemaschine nach Anspruch 1, **dadurch gekennzeichnet, dass** die Messeinrichtung (46) dazu eingerichtet ist, sich von Masse, Volumen und Dichte unterscheidende Parameter des Erntegutes (62) zu messen.

3. Erntemaschine nach Anspruch 1 oder 2, **dadurch gekennzeichnet, dass** die Messeinrichtung (46) den Gehalt des Erntegutes (62) an organischen Inhaltsstoffen misst.

4. Erntemaschine nach einem der Ansprüche 1 bis 3, **dadurch gekennzeichnet, dass** die Messeinrichtung (46) den Gehalt des Erntegutes (62) an Stärke und/oder enzymlöslichen organischen Substanzen (ElosT) und/oder nichtorganischen Mineralstoffen, wie z.B. Natrium und Magnesium (Asche) und/oder Rohprotein und/oder Öl und/oder Wasser und/oder Trockensubstanz und/oder die Verdaulichkeit und/oder den Energiegehalt und/oder den Rohfasergehalt und/oder die Faserlänge und/oder die Farbe des Erntegutes (62) ermittelt.

5. Erntemaschine nach einem der Ansprüche 1 bis 4, **dadurch gekennzeichnet, dass** die Messeinrichtung (46) im sichtbaren Wellenlängenbereich oder im nahen Infrarotbereich arbeitet, insbesondere mit Wellenlängen zwischen 100 nm und 1 mm, vorzugsweise zwischen 400 nm und 1,7 µm.

6. Erntemaschine nach einem der Ansprüche 1 bis 5, **dadurch gekennzeichnet, dass** die Einrichtung auch die Feuchtigkeit des Erntegutes (62) georeferenziert aufzeichnet.

## Claims

1. Harvester (10) having a measuring device (46) which is designed to detect the content of constituents in the crop (62) which is conveyed along a path, and having a device, in particular a computer (40), which is connected to the measuring device (46) and continuously logs the measured values of the measuring device (46) together with the throughput of the crop (62) in a georeferenced manner, **characterized in that** the harvester (10) is a forage harvester having a crop collecting device (20), a chopping drum (22) and a discharging device (26), and **in that** the measuring device (46) comprises a spectrometer which detects the intensity of broadband light in a wavelength-resolved manner, said light being reflected by crop (62) flowing through the discharging device (26).

2. Harvester according to Claim 1, **characterized in that** the measuring device (46) is designed to measure parameters of the crop (62) other than mass, volume and density.

3. Harvester according to Claim 1 or 2, **characterized in that** the measuring device (46) measures the content of organic constituents in the crop (62).

4. Harvester according to one of Claims 1 to 3, **characterized in that** the measuring device (46) determines the content of starch and/or enzyme-soluble organic substances (ElosT) and/or non-organic minerals, such as sodium and magnesium (ash), for example, and/or crude protein and/or oil and/or water and/or dry matter in the crop (62) and/or determines the digestibility and/or the energy content and/or the raw fibre content and/or the fibre length and/or the colour of the crop (62).

5. Harvester according to one of Claims 1 to 4, **characterized in that** the measuring device (46) operates in the visible wavelength range or in the near infrared range, in particular at wavelengths between 100 nm and 1 mm, preferably between 400 nm and 1.7 µm.

6. Harvester according to one of Claims 1 to 5, **characterized in that** the device also logs the moisture content of the crop (62) in a georeferenced manner.

## Revendications

1. Machine de récolte (10), avec un dispositif de mesure (46) prévu pour détecter la teneur de la récolte (62), transportée le long d'un trajet, en substances qu'elle contient, et avec un dispositif, en particulier un ordinateur (40), connecté au dispositif de mesure (46) et qui enregistre en continu, de manière géoréférencée, les valeurs de mesure du dispositif de mesure (46) conjointement avec le débit de la récolte (62), **caractérisée en ce que** la machine de récolte (10) est une faucheuse-hacheuse avec un dispositif de réception de récolte (20), un rotor hacheur (22) et un dispositif de décharge (26), et **en ce que** le dispositif de mesure (46) comprend un spectromètre qui détecte par résolution de la longueur d'onde l'intensité de la lumière à large bande qui est réfléchie par la récolte (62) qui traverse le dispositif de décharge (26).

2. Machine de récolte selon la revendication 1, **caractérisée en ce que** le dispositif de mesure (46) est prévu pour mesurer des paramètres de la récolte (62) différents de la masse, du volume et de la densité.

3. Machine de récolte selon la revendication 1 ou 2, **caractérisée en ce que** le dispositif de mesure (46) mesure la teneur de la récolte (62) en substances organiques qu'elle contient.

4. Machine de récolte selon l'une quelconque des revendications 1 à 3, **caractérisée en ce que** le dispositif de mesure (46) détermine la teneur de la récolte (62) en amidon et/ou en substances organiques pouvant être dissoutes par des enzymes (ElosT) et/ou en substances minérales non organiques, par exemple le sodium et le magnésium (cendres), et/ou en protéines brutes et/ou en huile et/ou en eau et/ou en substances sèches et/ou la digestibilité et/ou la teneur énergétique et/ou la teneur en fibres brutes et/ou la longueur des fibres et/ou la couleur de la récolte (62).

5. Machine de récolte selon l'une quelconque des revendications 1 à 4, **caractérisée en ce que** le dispositif de mesure (46) fonctionne dans la plage de longueur d'onde visible ou dans la plage infrarouge proche, notamment avec des longueurs d'ondes comprises entre 100 nm et 1 mm, de préférence entre 400 nm et 1,7 µm.

6. Machine de récolte selon l'une quelconque des revendications 1 à 5, **caractérisée en ce que** le dispositif enregistre aussi de manière géoréférencée l'humidité de la récolte (62).
